# EUROPÄISCHE PATENTSCHRIFT

(11) **EP 2 426 343 B1**
(45) Veröffentlichungstag und Bekanntmachung des Hinweises auf die Patenterteilung: **20.11.2013**
(21) Anmeldenummer: 10175655.9
(22) Anmeldetag: 07.09.2010
(51) Int. Cl.: F02M 25/07, H02K 5/14, H02K 11/02

(54) **Kfz-Verbrennungsmotor-Abgasrückführventil mit einem mechanisch kommutierten Antriebsmotor**
Motor vehicle combustion engine waste gas recovery valve with a mechanically commuted drive motor
Soupape de recyclage des gaz d'échappement pour moteur à combustion interne de véhicule automobile dotée d'un moteur d'entraînement commuté mécaniquement

(43) Veröffentlichungstag der Anmeldung: 07.03.2012
(73) Patentinhaber: Pierburg Pump Technology GmbH, 41460 Neuss (DE)
(72) Erfinder: Lindner, Enrico, 09322, Penig (DE); Zill, Mathias, 09629, Neukirchen (DE); Rathke, Ronald, 04720, Döbeln (DE); Schwabbauer, Frank, 04746, Hartha (DE)
(74) Vertreter: Patentanwälte ter Smitten Eberlein Rütten Partnerschaftsgesellschaft

(56) Entgegenhaltungen:
- EP-A2- 0 887 540
- DE-A1-102007 056 326

## Beschreibung

Gegenstand der Erfindung ist ein elektrisches Kfz-Verbrennungsmotor-Abgasrückführventil mit einem mechanisch kommutierten Antriebsmotor.

Abgasrückführventile dienen der Steuerung der Abgasrückführung in Abgasrückführventile dienen der Steuerung der Abgasrückführung in Verbrennungsmotoren zur Schadstoff-Reduktion im Abgas. Externe Abgasrückführventile sind nicht im Verbrennungsmotor-Motorblock, sondern außerhalb des Motorbfocks angeordnet. Sie verfügen daher in der Regel nicht über eine aktive Kühlung, so dass alle Bauteile des Abgasrückführventils hohen thermischen Belastungen ausgesetzt sind. Die wesentlichen Funktionsteile eines externen Abgasrückführventils sind ein elektrischer Antriebsmotor, ein Untersetzungs- Getriebe und ein Ventilkörper, Das Getriebe kann jedes möglichst kompakte Getriebe sein, beispielsweise ein Planetenrad-Getriebe, ein Schneckenrad-Getriebe etc.

Als Antriebsmotor für Abgasrückführventile wird aus Kostengründen ein mechanisch kommutierter Gleichstrom-Antriebsmotor eingesetzt. Nachteilig an der mechanischen Kommutierung sind die hierbei generierten relativ starken elektromagnetischen Störungen. Zur Entstörung eines mechanisch kommutierten Motors werden im allgemeinen Drosselspulen und Kondensatoren eingesetzt, die so rotornah wie möglich montiert werden, um eine bestmögliche Entstörwirkung zu erzielen. Kondensatoren vertragen jedoch nur Temperaturen von 150°C, so dass diese bei Abgasrückführventilen herkömmlicher Bauart nicht ohne Weiteres zur Entstörung verwendet werden können, da zusätzlich auch der Motorrotor im Betrieb weit über 200°C warm wird.

Aufgabe der Erfindung ist es demgegenüber, ein Kfz-Verbrennungsmotor-Abgasrückführventil mit verbesserter Entstörung des mechanisch kommutierten Antriebsmotors zu schaffen.

Diese Aufgabe wird erfindungsgemäß gelöst mit einem Kfz-Verbrennungsmotor-Abgasrückführventil mit den Merkmalen des Patentanspruches 1.

Bei dem erfindungsgemäßen Abgasrückführventil ist an einem Längsende des Antriebsmotors, bevorzugt an dem dem Getriebe beziehungsweise dem Ventilkörper zugewandten Längsende, eine in einer Querebene liegende Kunststoff-Trägerplatte angeordnet, die auf ihrer proximalen Seite, also auf ihrer dem Motorrotor zugewandten Seite, mindestens zwei Kommutator-Bürsten sowie den Kommutator-Bürsten zugeordnete Entstör-Drosselspulen aufweist. Auf der distalen Seite der Trägerplatte, also auf der dem Motorrotor abgewandten Seite, ist ein oder sind mehrere Entstör-Kondensatoren angeordnet. Die Entstör-Kondensatoren sind also so weit wie möglich entfernt von dem Motorrotor angeordnet. Die Kunststoff-Trägerplatte stellt ferner eine thermische Isolation zu den Motorspulen des Antriebsmotors her.

Die Entstör-Drosselspulen bestehen aus einem Ferrit- oder Keramik-Kern und einer Kupfer-Säule, und stellen daher grundsätzlich gute Wärmeleiter und Wärmespeicher dar. Dadurch, dass die Drosselspulen auf der proximalen Seite der Trägerplatte angeordnet sind, wird der Wärmeeintrag zu der distalen Seite der Trägerplatte, und damit der Wärmeeintrag zu den Entstör-Kondensatoren so gering wie möglich gehalten. Ferner sind die Drosselspule elektrisch sehr nah an dem Kommutator angeordnet, so dass sie ihre filternde Wirkung mit größtmöglicher Effektivität entfalten können.

Wie Versuche ergeben haben, kann durch eine derartige Anordnung der Entstör-Kondensatoren mit großer Sicherheit sichergestellt werden, dass diese sich auch bei ungünstigen Betriebsbedingungen nicht über 150°C erwärmen, so dass sie nicht zerstört werden.,

Gemäß einer bevorzugten Ausgestaltung liegen alle Entstör-Drosselspulen in einer Querebene. Hierdurch wird der Antriebsmotor in seiner axialen Länge so kompakt wie möglich gehalten. Dies ist deshalb von Bedeutung, weil der Bauraum in der Nähe des Verbrennungsmotor-Motorblocks naturgemäß sehr begrenzt ist.

Vorzugsweise weist jeder Entstör-Kondensator einen Kondensatorkörper und zwei bevorzugt auf einer einzigen geraden Linie liegende Verbindungsleitungen auf, wobei die Verbindungsleitungen in einer Querebene des Antriebsmotors liegen. Der Kondensator ist also nicht stehend auf der Trägerplatte, sondern liegend auf der Trägerplatte angeordnet. Auch durch diese Maßnahme wird der Antriebsmotor in seiner axialen Länge so kompakt wie möglich gehalten.

Gemäß einer bevorzugten Ausgestaltung weist die Trägerplatte Kondensatortaschen auf, in denen der Kondensatorkörper unbeweglich festgesetzt ist. Der Kondensatorkörper kann beispielsweise axial in die zugeordnete Kondensatortasche eingerastet sein. Die Kondensatortasche dient in erster Linie der mechanischen Fixierung des Kondensators. Ferner wird durch die Kondensatortasche die thermische Isolation des Kondensators, und insbesondere des Kondensatorkörpers verbessert.

Besonders bevorzugt ist der Kondensatorkörper in der Kondensatortasche jeweils mit einer Vergussmasse vergossen. Hierdurch wird eine sehr gute mechanische Fixierung realisiert. Ferner verbessert die Vergussmasse noch die thermische Isolation des Kondensators beziehungsweise des Kondensatorkörpers.

Vorzugsweise weist die Trägerplatte eine zentrale Öffnung für die Motorwelle auf. Besonders bevorzugt ist die zentrale Öffnung, außer den Durchgängen für elektrische Leitungen, die einzige axial durchgehende Öffnung in der Trägerplatte. Hierdurch wird der konvektive Wärmeeintrag von der proximalen zu der distalen Seite der Trägerplatte so gering wie möglich gehalten.

Gemäß einer bevorzugten Ausgestaltung ist jeweils eine Verbindungsleitung der Kondensatoren mit einem axial durch die Trägerplatte hindurchtretenden Motorkontakt durch Klemmung elektrisch kontaktiert. Es wird also keine stoffschlüssige elektrische Verbindung hergestellt, sondern ausschließlich eine elektrische Verbindung durch Klemmung beziehungsweise Quetschung, was erheblich einfacher und preiswerter in der Montage ist.

Im Folgenden wird ein Ausführungsbeispiel der Erfindung anhand der Zeichnungen näher erläutert.

Es zeigen:

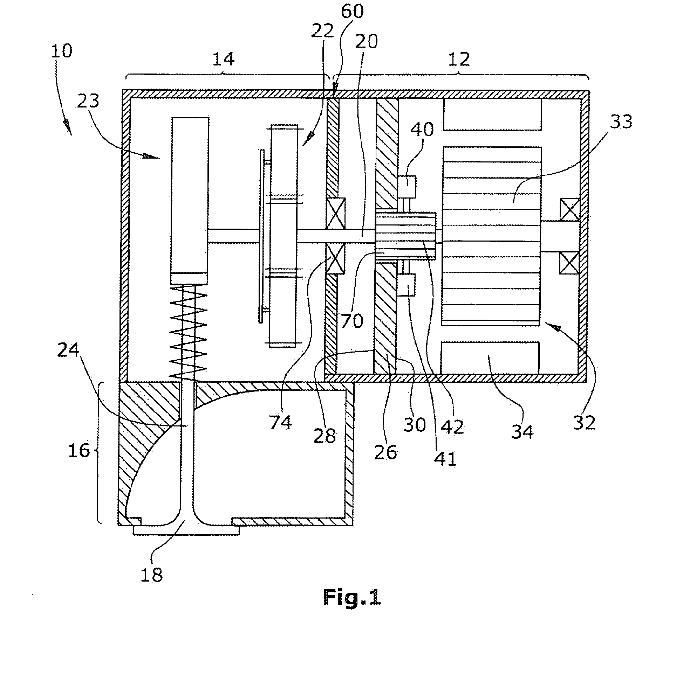

- Figur 1: eine Darstellung eines elektrischen Kfz-Verbrennungsmotor-Abgasrückführventils,

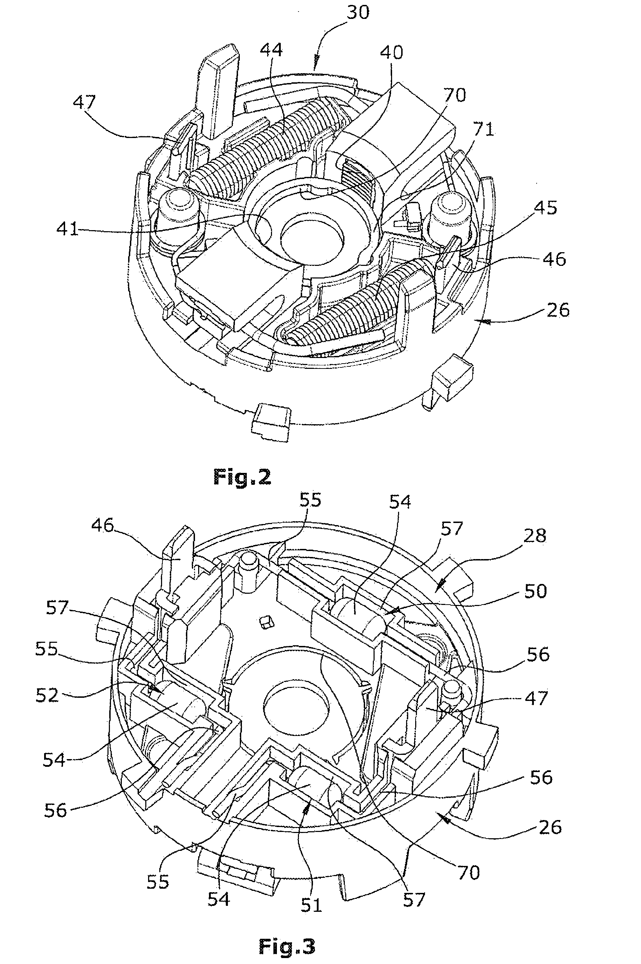

- Figur 2: eine perspektivische Ansicht der proximalen Seite der Trägerplatte des Abgasrückführventils der Figur 1, und
- Figur 3: eine perspektivische Ansicht der distalen Seite der Trägerplatte des Abgasrückführventils der Figur 1.

Das elektrische Kfz-Verbrennungsmotor-Abgasrückführventil 10 besteht im wesentlichen aus drei Komponenten, nämlich einem elektrischen Antriebsmotor 12, einem Untersetzungs-Getriebe 14 und einem Ventilmodul 16 mit einem Ventilkörper 18, Der Antriebsmotor 12 ist ein mechanisch kommutierter Motor, der mit seiner Motorwelle 20 mit dem Planetenrad-Getriebe 22 verbunden ist, das seinerseits über ein Nockenrad 23 eine Ventilstange 24 mit dem Ventilkörper 18 stufenlos zwischen einer Öffnungsposition und einer Schließposition axial bewegt.

Der Antriebsmotor 12 weist an seinem proximalen Ende eine Kunststoff-Trägerplatte 26 auf, die in einer Querebene des Antriebsmotors 12 liegt. Die Trägerplatte 26 ihrerseits hat eine distale Seite 28 und eine proximale Seite 30. Die proximale Seite 30 der Trägerplatte 26 ist einem Motorrotor 32 mit Rotorspulen 33 und einem Motorstator 34 des Antriebsmotors 12 zugewandt, die distale Seite 28 ist dem Motorrotor 32 und dem permanent magnetischen Motorstator 34 abgewandt.

Auf der proximalen Seite 30 der Trägerplatte 26 sind zwei Kommutator-Bürsten 40, 41 angeordnet, die zusammen mit einem Kommutator-Ring 42 den Kommutator bilden, durch den die Rotorspulen 33 bestromt werden. Ferner sind auf der proximalen Seite 30 zwei Entstör-Drosselspulen 44,45 angeordnet, deren eines Ende jeweils mit einer Bürste 40,41 und deren anderes Ende jeweils mit einem Motorkontakt 46, 47 verbunden ist, der jeweils axial durch die Trägerplatte 26 hindurchtritt. Die Drosselspulen 44, 45 liegen in einer Querebene.

Auf der distalen Seite 28 der Trägerplatte 26 sind die beiden Motorkontakte 46, 47 zu erkennen, die durch drei Entstör-Kondensatoren 50, 51, 52 direkt miteinander sowie jeweils mit einem metallischen Motorgehäuse-Abschlussdeckel 60 elektrisch verbunden sind. Die drei Kondensatoren 50, 51, 52 bestehen jeweils im wesentlichen aus einem Kondensator-Körper 54 und zwei Verbindungsleitungen 55, 56. Der Kondensatorkörper 54 und die Verbindungsleitungen 55, 56 aller drei Kondensatoren 50, 51, 52 liegen im Wesentlichen in einer Querebene. Die Kondensator-Körper 54 sind jeweils in Kondensatortaschen 57 der Trägerplatte 26 unbeweglich eingeklemmt beziehungsweise eingerastet. Die Kondensator-Körper 54 können in den Kondensatortaschen 57 mit einer geeigneten Kunststoff-Vergussmasse vergossen sein.

Die Trägerplatte 26 weist eine zentrale Öffnung 70 auf, durch die die Motorwelle 20 hindurchtritt. Das getriebeseitige Ende der Motorwelle 20 ist durch ein Wälzlager 74 gelagert, das von dem Abschlussdeckel 60 gehalten wird, Die Trägerplatte 26 weist keine weiteren offenen Öffnungen in axialer Richtung auf.

Die unmontierte Trägerplatte 26 weist einen Bürsten-Rückhaltering 71 auf, der bei der Montage durch den hindurchtretenden Kommunikator-Ring 42 ausgestoßen wird.

## Patentansprüche

1. Elektrisches Kfz-Verbrennungsmotor-Abgasrückführventil (10) mit einem mechanisch kommutierten Antriebsmotor (12) und einem daran angeschlossenen Untersetzungs-Getriebe (14), das mit einem Ventilkörper (18) mechanisch verbunden ist, wobei
der Antriebsmotor (12) an einem Längsende eine in einer Querebene liegende Kunststoff-Trägerplatte (26) aufweist, die auf ihrer dem Motorrotor (32) zugewandten Seite mindestens zwei Kommutator-Bürsten (40,41) und den Bürsten (40,41) zugeordnete Entstör-Drosselspulen (44,45), und auf ihrer dem Motorrotor (32) abgewandten Seite mindestens einen Entstör-Kondensator (50,51,52) aufweist.

2. Elektrisches Kfz-Verbrennungsmotor-Abgasrückführventil (10) nach Anspruch 1, wobei alle Entstör-Drosselspulen (44,45) in einer Querebene liegen.

3. Elektrisches Kfz-Verbrennungsmotor-Abgasrückführventil (10) nach Anspruch 1 oder 2, wobei die Entstör-Kondensatoren (50,51,52) jeweils einen Kondensatorkörper (54) und zwei Verbindungsleitungen (55,56) aufweisen, die zusammen mit dem Kondensatorkörper (54) in einer Querebene liegen.

4. Elektrisches Kfz-Verbrennungsmotor-Abgasrückführventil (10) nach einem der vorangegangenen Ansprüche, wobei die Trägerplatte (26) Kondensatortaschen (56) aufweist, in denen jeweils der Kondensatorkörper (54) der Kondensatoren (50,51,52) unbeweglich sitzt.

5. Elektrisches Kfz-Verbrennungsmotor-Abgasrückführventil (10) nach Anspruch 4, wobei der Kondensatorkörper (54) in der Kondensatortasche (56) mit einer Vergussmasse vergossen ist.

6. Elektrisches Kfz-Verbrennungsmotor-Abgasrückführventil (10) nach einem der vorangegangenen Ansprüche, wobei die Trägerplatte (26) eine zentrale Öffnung (70) für die Motorwelle (20) aufweist.

7. Elektrisches Kfz-Verbrennungsmotor-Abgasrückführventil (10) nach einem der vorangegangenen Ansprüche, wobei jeweils eine Verbindungsleitung der Kondensatoren (50,51,52) mit axial durch die Trägerplatte (26) hindurchtretenden Motorkontakten (46,47) durch Klemmung elektrisch kontaktiert ist.

## Claims

1. An electric exhaust gas recirculation valve (10) for an internal combustion engine of a motor vehicle, comprising a drive motor (12) configured to be mechanically commutated and a reduction gearing (14) connected thereto, the reduction gearing being mechanically connected to a valve body (18), wherein
the drive motor (12) comprises a plastic carrier panel (26) lying in a transverse plane at a longitudinal end, the plastic carrier panel comprising, on a side facing the motor rotor (32), at least two commutator brushes (40, 41) and suppression reactance coils (44, 45) assigned to the at least two brushes (40, 41), and at least one suppression capacitor (50, 51, 52) arranged on a side averted from the motor rotor (32).

2. The electric exhaust gas recirculation valve (10) as recited in claim 1, wherein all suppression reactance coils (44, 45) lie in a transverse plane.

3. The electric exhaust gas recirculation valve (10) as recited in claim 1 or 2, wherein each of the suppression capacitors (50, 51, 52) comprises a capacitor body (54) and two connecting lines (55, 56) which are configured to lie in a transverse plane together with the capacitor body (54).

4. The electric exhaust gas recirculation valve (10) as recited in one of the preceding claims, wherein the carrier panel (26) further comprises capacitor pockets (56), in which the capacitor body (54) of the respective capacitors (50, 51, 52) are arranged in an immobilized manner.

5. The electric exhaust gas recirculation valve (10) as recited in claim 4, wherein the capacitor body (54) is cast in the capacitor pocket (56) using a casting material.

6. The electric exhaust gas recirculation valve (10) as recited in one of the preceding claims, wherein the plastic carrier panel (26) comprises a central opening (70) for the motor shaft (30).

7. The electric exhaust gas recirculation valve (10) as recited in one of the preceding claims, wherein a respective connecting line of the capacitors (50, 51, 52) is electrically contacted with motor contacts (46, 47) by clamping, the motor contacts protruding axially through the carrier panel (26).

## Revendications

1. Soupape électrique de recyclage des gaz d'échappement (10) pour moteur à combustion interne de véhicule automobile dotée d'un moteur d'entraînement (12) commuté mécaniquement et un réducteur de vitesse (14) relié au moteur d'entraînement et relié mécaniquement à un corps de soupape (18), dans laquelle
ledit moteur d'entrainement (12) comprend une plaque de support (26) en matière plastique située à une de ses extrémités longitudinales dans un plan transversal, ladite plaque comportant, sur la face dirigée vers le rotor du moteur (32), au moins deux balais de collecteur (40, 41) et des bobines d'antiparasitage (44, 45) associées aux balais (40, 41), et comportant, sur la face opposée au rotor du moteur (32), au moins un condensateur d'antiparasitage (50, 51, 52).

2. Soupape électrique de recyclage des gaz d'échappement (10) pour moteur à combustion interne de véhicule automobile selon la revendication 1, dans laquelle toutes les bobines d'antiparasitage (44, 45) sont situées dans a plan transversal.

3. Soupape électrique de recyclage des gaz d'échappement (10) pour moteur à combustion interne de véhicule automobile selon les revendications 1 ou 2, dans laquelle chaque condensateur d'antiparasitage (50, 51, 52) comporte un corps de condensateur (54) et deux lignes de connexion (55, 56) qui sont situées dans un plan transversal avec le corps de condensateur (54).

4. Soupape électrique de recyclage des gaz d'échappement (10) pour moteur à combustion interne de véhicule automobile selon l'une quelconque des revendications précédentes, dans laquelle la plaque de support (26) présente des poches à condensateur (56) dans lesquelles sont placés de manière immobile les corps de condensateur (54) respectifs des condensateurs (50, 51, 52).

5. Soupape électrique de recyclage des gaz d'échappement (10) pour moteur à combustion interne de véhicule automobile selon les revendications 1 ou 4, dans laquelle ledit corps de condensateur (54) est scellé dans la poche à condensateur (56) par une masse de scellement.

6. Soupape électrique de recyclage des gaz d'échappement (10) pour moteur à combustion interne de véhicule automobile selon l'une quelconque des revendications précédentes, dans laquelle ladite plaque de support (26) présente une ouverture centrale (70) pour l'arbre du moteur (20).

7. Soupape électrique de recyclage des gaz d'échappement (10) pour moteur à combustion interne de véhicule automobile selon l'une quelconque des revendications précédentes, dans laquelle une des lignes de connexion des condensateurs (50, 51, 52) respectives est en contact électrique, par serrage, avec des contactes du moteur (46, 47) passant axialement à travers la plaque de support (26).
